Europäisches Patentamt

**European Patent Office**

Office européen des brevets

(19)

(11) Numéro de publication: **0 125 162 B1**

(12) # FASCICULE DE BREVET EUROPEEN

(45) Date de publication du fascicule du brevet:
**28.01.87**

(51) Int. Cl.⁴: **C 02 F 1/78**

(21) Numéro de dépôt: **84400768.2**

(22) Date de dépôt: **18.04.84**

(54) **Appareil pour la dissolution d'ozone dans un fluide.**

(30) Priorité: **10.05.83 FR 8307764**

(43) Date de publication de la demande:
**14.11.84 Bulletin 84/46**

(45) Mention de la délivrance du brevet:
**28.01.87 Bulletin 87/5**

(84) Etats contractants désignés:
**BE CH DE GB IT LI**

(56) Documents cités:
**CH - A - 435 129**
**DE - C - 531 200**
**FR - A - 408 317**
**FR - A - 1 086 104**
**FR - A - 1 247 573**
**US - A - 1 594 946**
**US - A - 4 332 687**

**Le dossier contient des informations techniques présentées postérieurement au dépôt de la demande et ne figurant pas dans le présent fascicule.**

(73) Titulaire: **SOCIETE LYONNAISE DES EAUX ET DE L'ECLAIRAGE Société dite:, 45, rue Cortambert, F-75016 Paris (FR)**

(72) Inventeur: **Brodard, Eric, 13, rue Michelet, F-92500 Rueil Malmaison (FR)**
Inventeur: **Duguet, Jean-Pierre, 13, Avenue Charles de Gaulle, F-78230 Le Pecq (FR)**
Inventeur: **Mallevialle, Joel, 4, Avenue Gabriel, F-78420 Carrières-sur-Seine (FR)**
Inventeur: **Roustan, Michel, 1, Résidence le Parc de Ramonville, F-31520 Ramonville (FR)**

(74) Mandataire: **Armengaud, Charles, Cabinet ARMENGAUD AINE 3, Avenue Bugeaud, F-75116 Paris (FR)**

## Description

La présente invention concerne un appareil pour la dissolution d'ozone dans un fluide par injection dans ce fluide d'air ozoné ou d'un gaz tel qu'oxygène, ozoné, utilisable en particulier pour le traitement à l'ozone d'eau, notamment d'eau destinée à la consommation humaine ou pour l'épuration de gaz chargés de composés toxiques tels qu'aldéhydes par exemple.

De nombreux appareils ont déjà été décrits qui permettent d'effectuer la dissolution de l'ozone dans un fluide, et particulièrement dans l'eau. L'air ozoné est généralement dispersé dans l'eau, dans une ou plusieurs chambres de contact, sous forme de bulles, au moyen de buselures, de collecteurs ramifiés à trous ou de corps poreux, à co-courant ou à contre-courant de l'eau à traiter.

Ces appareils présentent des inconvénients: il se produit dans la chambre de contact des passages préférentiels des bulles d'air ozoné et de l'eau, le contact air-eau n'est pas homogène et le temps de transfert est trop court. En outre, la pression diminuant avec la montée des bulles, la capacité de dissolution de l'ozone diminue également.

D'autres appareils connus, tels que ceux décrits dans le document FR-A-1 086 104 consistent en des injecteurs aspirant l'air ozoné sous vide ou à faible pression et le refoulant avec l'eau à traiter dans une chambre de contact avec création de turbulence. Plusieurs types de turbines ont également été décrits qui permettent d'émulsionner l'air ozoné dans l'eau à traiter. Ces dispositifs à turbines assurent une bonne dissolution de l'ozone dans l'eau mais présentent des difficultés de régulation de la pression de l'air ozoné injecté; en outre ils nécessitent un appareillage mécanique important tel que moteurs et surpresseurs réalisés spécialement en matériaux résistant à la corrosion. Par ailleurs, ces appareils entraînent une consommation importante d'énergie.

Enfin, le document US-A-1.594.946 fait connaître une unité tubulaire de mélange constituée par une enceinte dans laquelle le mélange gaz ozoné-eau à traiter circule continuellement de haut en bas et de bas en haut de l'enceinte, puis dans la direction inverse et passe par une série de chicanes destinées à le favoriser, pour sortir à la base de cette enceinte. Le mélange est réalisé par son passage dans des anneaux concentriques qui allongent le trajet parcouru par le mélange.

L'appareil suivant l'invention pallie ces inconvénients et permet en outre de réaliser de façon économique la dissolution de l'ozone dans l'eau à une pression plus importante tout en assurant un contact des bulles gaz ozoné-eau plus long que ne l'autorisent les appareils connus à ce jour.

L'appareil suivant l'invention, pour la dissolution d'ozone dans un fluide tel que l'eau en vue de son traitement par l'ozone, par injection dans ce fluide d'air ozoné ou d'un gaz ozoné, comportant au moins un tube disposé verticalement dans une enceinte tubulaire verticale et communiquant avec cette enceinte par son extrémité inférieure et par son extrémité supérieure avec des moyens d'amenée du fluide à traiter et de l'air ozoné ou du gaz ozoné, est caractérisé en ce que l'enceinte tubulaire verticale, fermée à ses deux extrémités et munie de moyens pour l'évacuation du fluide traité et de l'air ou du gaz, ozoné en excès est de longueur très importante, comprise entre 10 et 100 mètres, par rapport à son diamètre compris entre 0,5 et 5 mètres, le tube ou les tubes, qu'elle comporte, de même longueur que l'enceinte, ayant un diamètre inférieur à 0,5 mètre, et caractérisé en ce que l'appareil comporte des moyens pour établir une vitesse de passage du fluide dans le tube, ou les tubes, supérieure à 0,5 mètre/seconde.

Suivant une disposition préférée de l'invention les tubes verticaux sont disposés en au moins un faisceau.

Suivant une disposition de l'invention, le faisceau de tubes verticaux est disposé dans l'axe de l'enceinte tubulaire.

Le ou les faisceaux de tubes, ou bien font saillie hors de l'enceinte tubulaire par leur extrémité supérieure, ou bien sont entièrement contenus dans l'enceinte, auquel cas ils sont surmontés par les moyens tels que déversoirs par exemple, d'évacuation du fluide traité.

Suivant l'invention, chaque tube communique par son extrémité supérieure avec la canalisation de fluide tel qu'eau à traiter au moyen de vannes tout ou rien permettant la distribution de l'eau dans un nombre optimal de tubes de façon à obtenir une vitesse de passage de l'eau comprise entre 0,5 et 1 m/s, de préférence 0,7 m/s.

Dans une disposition de l'invention où le gaz ozoné est de l'oxygène, l'amenée de gaz ozoné dans chaque tube est disposée dans la partie supérieure du tube faisant saillie hors de l'enceinte.

Dans une autre disposition de l'invention où le gaz ozoné est de l'air, l'amenée de gaz ozoné dans chaque tube est prévue dans la partie supérieure du tube située dans l'enceinte.

Le débit de gaz ozoné par rapport au débit de fluide tel qu'eau à traiter est, de préférence, inférieure à 25%.

L'enceinte tubulaire a une longueur comprise entre 10 et 100 m et un diamètre compris entre 0,5 et 5 m. Chaque tube vertical, de même longueur que l'enceinte, a un diamètre inférieur à 50 cm, de préférence compris entre 20 et 30 cm.

Conformément à l'invention, les tubes verticaux sont maintenus en un faisceau fixé à la paroi interne de l'enceinte tubulaire par une pluralité de pales inclinées de préférence de 30 à 60° sur l'horizontale, ces pales provoquant en outre un mouvement de rotation de l'eau autour du faisceau de tubes améliorant le temps de contact gaz ozoné-eau.

Ce mouvement de rotation peut être également obtenu par une spirale disposée sur la face interne de l'enceinte tubulaire.

Suivant une disposition de l'invention, chaque tube est muni, dans sa partie supérieure ou à son extrémité inférieure, d'un moyen d'amenée d'un catalyseur, par exemple peroxyde d'hydrogène permettant l'amélioration du transfert de la phase gazeuse dans la phase liquide.

La description qui va suivre, fait en référence aux dessins annexés permettra de mieux comprendre l'invention.

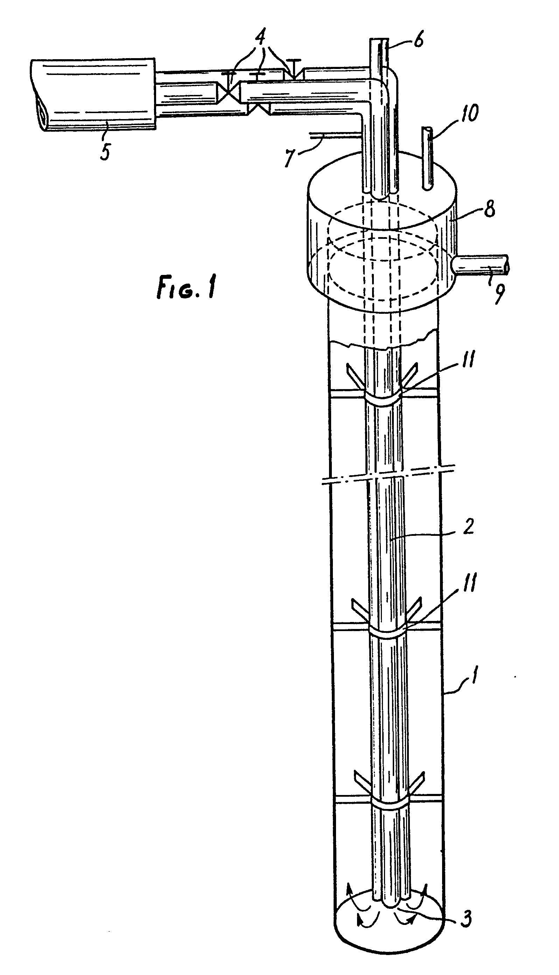

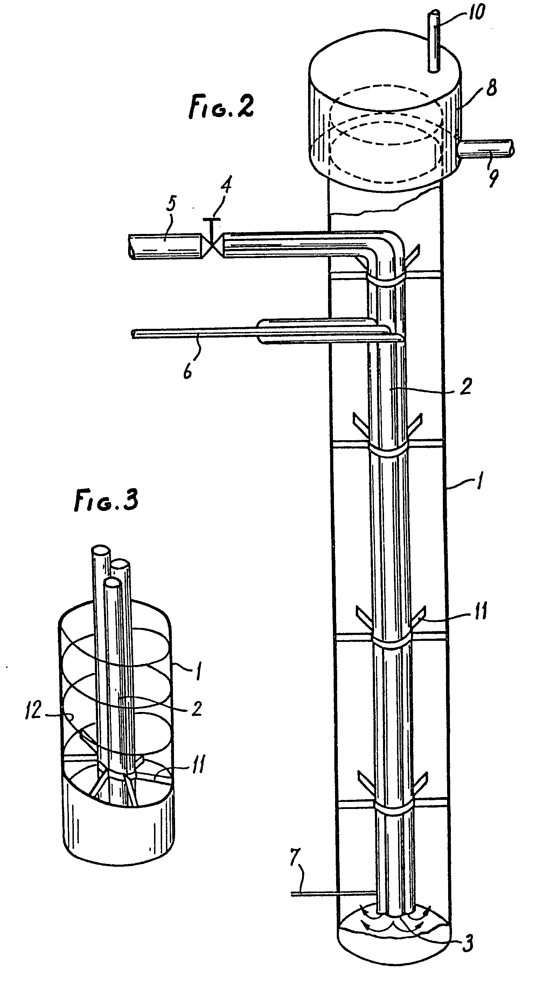

Les figures 1 à 3 de ces dessins représentent schématiquement, la figure 3 en perspective et partiellement, des appareils conformes à l'invention suivant diverses formes de réalisation possibles données à titre d'exemples non limitatifs, de l'invention.

L'appareil est constitué par une enceinte tubulaire verticale fermée 1 dans laquelle plonge un faisceau de tubes verticaux 2 communiquant par leur extrémité inférieure 3 avec l'enceinte et par les vannes tout ou rien 4 avec la canalisation 5 d'amenée d'eau à traiter.

L'air ozoné ou le gaz ozoné est introduit dans la partie supérieure de chaque tube par des canalisations 6.

Dans la forme de réalisation représentée à la figure 1, la partie supérieure des tubes est située à l'extérieur de l'enceinte 1 et les amenées d'eau à traiter et d'air ozoné ou de gaz ozoné, ce dernier par les canalisations 6, s'effectuant extérieurement à l'enceinte.

Dans l'exemple de réalisation traité à la figure 2, le faisceau tubulaire 2 est entièrement contenu dans l'enceinte 1. L'amenée au faisceau tubulaire de l'eau à traiter et d'air ozoné ou de gaz ozoné s'opère alors à travers l'enceinte.

Il est prévu, à proximité de l'extrémité inférieure ou supérieure du faisceau tubulaire une canalisation 7 pour l'introduction d'un fluide annexe, tel que par exemple un catalyseur.

Le temps de passage de l'eau dans le tube est d'environ 30 s; la vitesse de passage voisine de 0,7 m/s.

Des pales 11 fixent le faisceau de tubes à la paroi de l'enceinte 1 et assurent en outre un mouvement de rotation du fluide remontant dans l'enceinte à sa sortie du faisceau de tubes, ce qui augmente le temps de contact entre l'air ozoné ou le gaz ozoné avec le fluide à traiter.

Le même effet peut être obtenu, ou renforcé, par une spirale 12, disposée sur la surface interne de l'enceinte 1, comme le montre la figure 3. Cette spirale peut avoir avantageusement de 2 à 5 cm d'épaisseur et de 2 à 10 mm de largeur.

*Exemple*

On a réalisé des essais comparatifs de dissolution d'ozone dans l'eau en utilisant un appareil suivant l'invention constitué par une enceinte tubulaire de 25 m de hauteur dans laquelle était disposé un faisceau de deux tubes verticaux de 3,7 cm de diamètre et une colonne classique munie de corps poreux pour l'injection de gaz ozoné.

Dans des conditions équivalentes, des quantités d'ozone introduites par litre d'eau et des rapports de débits de gaz ozoné/débits d'eau à traiter identiques, on a obtenu avec l'appareil suivant l'invention des rendements de 85 à 100% pour un temps de contact de 1 mm et avec l'appareil classique des rendements de 50 à 60% pour un temps de contact de 10 mm.

Les résultats obtenus sont consignés dans le tableau ci-après.

| | Débit d'eau | Temps de contact | Débit de gaz ozoné | Production d'ozone | Concentration en ozone à la sortie des tubes | Rendement |
|---|---|---|---|---|---|---|
| Appareil classique | 8,7 l mn$^{-1}$ | 10 mn | 1,2 l mn$^{-1}$ | 8,4 mg mn$^{-1}$ | — | 52% |
| | | | 0,4 l mn$^{-1}$ | 2,8 mg mn$^{-1}$ | — | 56% |
| Appareil suivant l'invention | 100 l mn$^{-1}$ | 1 mn | 4,3 l mn$^{-1}$ | 63 mg mn$^{-1}$ | 0,61 mg/l | 100% |
| | | | 9,4 l mn$^{-1}$ | 102 mg mn$^{-1}$ | 0,99 mg/l | 97% |
| | | | 12,8 l mn$^{-1}$ | 134 mg mn$^{-1}$ | 1,10 mg/l | 85% |

**Revendications**

1. Appareil pour la dissolution d'ozone dans un fluide tel que l'eau en vue de son traitement par l'ozone, par injection dans ce fluide d'air ozoné ou d'un gaz ozoné, comportant au moins un tube disposé verticalement dans une enceinte tubulaire verticale et communiquant avec cette enceinte par son extrémité inférieure et par son extrémité supérieure avec des moyens d'amenée du fluide à traiter et de l'air ozoné ou du gaz ozoné, caractérisé en ce que l'enceinte tubulaire verticale (1), fermée à ses deux extrémités et munie de moyens (8, 9) pour l'évacuation du fluide traité et de l'air, ou du gaz, ozoné en excès est de longueur très importante, comprise entre 10 et 100 mètres, par rapport à son diamètre, compris entre 0,5 et 5 mètres, le tube, ou les tubes, qu'elle comporte, de même longueur que l'enceinte, ayant un diamètre inférieur à 0,5 mètre, et caractérisé en ce que l'appareil comporte des moyens pour établir une vitesse de passage du fluide dans le tube, ou les tubes, supérieure à 0,5 mètre/seconde.

2. Appareil suivant la revendication 1, caractérisé en ce que dans le cas où il comporte une pluralité de tubes verticaux (2) ces tubes sont disposés en au moins un faisceau, le ou les tubes, ou les faisceaux de tubes étant disposés suivant l'axe de l'enceinte tubulaire (1).

3. Appareil suivant l'une quelconque des revendications précédentes, caractérisé en ce que le tube, ou le, ou les faisceaux de tubes verticaux, font saillie par leur extrémité supérieure sur l'enceinte tubulaire, les amenées de fluide à traiter et d'air ozoné ou de gaz ozoné, au(x) tube(s) se faisant alors en dehors de l'enceinte.

4. Appareil suivant l'une quelconque des revendications précédentes, caractérisé en ce que le tube, ou le, ou les faisceaux de tubes verticaux sont entièrement contenus dans l'enceinte, les amenées de fluide à traiter et d'air ozoné ou de gaz ozoné à l'extrémité supérieure du ou des tubes pénétrant l'enceinte transversalement pour aboutir au(x) tube(s).

## Patentansprüche

1. Vorrichtung zur Auflösung von Ozon in einem Fluid, wie etwa Wasser, für die Ozonbehandlung durch Einspritzen von ozonisierter Luft oder ozonisiertem Gas in das Fluid, mit mindestens einem vertikal in einem rohrförmigen vertikalen Gehäuse angeordneten Rohr, welches über sein unteres Ende mit dem Gehäuse in Verbindung steht und über sein oberes Ende mit Zufuhreinrichtungen für das zu behandelnde Fluid und die ozonisierte Luft oder das ozonisierte Gas in Verbindung steht, dadurch gekennzeichnet, dass das rohrförmige vertikale Gehäuse (1), welches an seinen beiden Enden geschlossen und mit Einrichtungen (8, 9) zum Abziehen des behandelten Fluids und der überschüssigen ozonisierten Luft oder des ozonisierten Gases ausgerüstet ist, eine gegenüber seinem Durchmesser zwischen 0,5 und 5 m sehr grosse Länge zwischen 10 und 100 m aufweist, dass das Rohr oder die Rohre, das bzw. die im Gehäuse angeordnet sind dieselbe Länge wie das Gehäuse besitzen sowie einen Durchmesser < 0,5 m aufweist bzw. aufweisen und dass die Vorrichtung eine Einrichtung zur Einstellung eine Durchflussgeschwindigkeit des Fluids im Rohr oder den Rohren von grösser als 0,5 m/s aufweist.

2. Vorrichtung nach Anspruch 1, dadurch gekennzeichnet, dass im Falle einer Anzahl von vertikalen Rohren (2) diese in mindestens einem Bündel angeordnet sind, und dass das oder die Rohre oder die Bündel von Rohren längs der Achse des rohrförmigen Gehäuses (1) angeordnet sind.

3. Vorrichtung nach einem der vorhergehenden Ansprüche, dadurch gekennzeichnet, dass das Rohr oder das oder die vertikalen Rohrbündel an ihrem oberen Ende über das rohrförmige Gehäuse vorstehen, wobei die Zufuhr von zu behandelndem Fluid und ozonisierter Luft oder ozonisiertem Gas zu den Rohren ausserhalb des Gehäuses erfolgt.

4. Vorrichtung nach einem der vorhergehenden Ansprüche, dadurch gekennzeichnet, dass das Rohr oder das oder die vertikalen Rohrbündel zur Gänze im Gehäuse untergebracht sind, wobei die Zufuhr von zu behandelndem Fluid und von ozonisierter Luft oder ozonisiertem Gas zum oberen Ende des oder der Rohre das Gehäuse quer durchdringt bzw. durchdringen, um zu dem oder den Rohren zu führen.

## Claims

1. Apparatus for dissolving ozone in a fluid such as water for ozonization, by injecting in said fluid ozonized air on an ozonized gas, which comprises at least one tube extending vertically into a vertically extending tubular chamber, the lower end of each tube communicating with said chamber and the upper end of each tube communicating with supply means for delivering the fluid to be treated and ozonized air or ozonized gas, characterized in that said vertical tubular chamber (1), having its two ends closed and being provided with means (9) for removing the treated fluid and the excess ozonized air, or gas, has a very important length, from 10 to 100 metres, as compared with its diameter, which ranges from 0.5 to 5 m, the tube or tubes and the chamber having the same length, the diameter of said tubes being less than 50 cm, and characterized in that said apparatus is provided with means for achieving a flow velocity of the fluid in said tube, or tubes, higher than 0.5 m/sec.

2. Apparatus according to claim 1, characterized in that said tubes are arranged in at least a bundle when said apparatus includes a plurality of vertical tubes (2), the tube or tubes, or the bundle of tubes, being positioned along the axis of said tubular chamber (1).

3. Apparatus according to any of the preceding claims, characterized in that the upper end of the tube, or the bundle or bundles of vertical tubes, extend outwardly through said tubular chamber, the fluid and the ozonized gas or air introducing means being connected to the tube(s) exteriorly of said chamber.

4. Apparatus according to any of the preceding claims, characterized in that said tube, or the bundle or bundles of vertical tubes, are fully enclosed in said chamber, said means for introducing the fluid to be treated and the ozonized air or gas into the upper end of said tube or tubes extending transversely into said chamber and ending into said tube(s).

Fig. 1

Fig.2

Fig.3